# EUROPÄISCHE PATENTANMELDUNG

(11) **EP 4 257 015 A1**
(43) Veröffentlichungstag der Anmeldung: **11.10.2023**
(21) Anmeldenummer: 22202801.1
(22) Anmeldetag: 20.10.2022
(51) Int. Cl.: A47J 36/38, A47J 36/06, A47J 27/00

(54) **TOPFANORDNUNG, KÜCHENMASCHINE SOWIE AUFSATZVORRICHTUNG**

(30) Priorität: 25.03.2022 DE 202022101600 U
(71) Anmelder: Wundermix GmbH, 85748 Garching b. München (DE)
(72) Erfinder: Keusgen, Adrian, 79346 Endingen am Kaiserstuhl (DE)
(74) Vertreter: Patentanwälte Bauer Vorberg Kayser

(57) **Zusammenfassung**

Topfanordnung, beispielsweise für eine Küchenmaschine, umfassend einen Topf (1) mit einer Topföffnung (2) und eine Aufsatzvorrichtung (3), die dazu ausgebildet ist, auf die Topföffnung (2) aufgesetzt zu werden, wobei die Aufsatzvorrichtung (3) eine Filtereinrichtung (4) zum Filtern von Stoffen, beispielsweise Dämpfen, Partikeln und/oder Geruchsstoffen aufweist, die Filtereinrichtung (4) umfassend eine mit einem Filtermedium (F) befüllbare Filterkammeranordnung (5), wobei die Filterkammeranordnung (5) eine Eintrittsöffnung (6) aufweist, die dazu ausgebildet ist, bei einer Verwendung der Topfanordnung in einer Kochanwendung, beispielsweise einem Kochvorgang eines in dem Topf (1) aufgenommenen Lebensmittels, bei der die Aufsatzvorrichtung (3) auf den Topf (1) aufgesetzt ist, Stoffe aus dem Topf (1) in einen durch die Filterkammeranordnung (5) gebildeten Filterraum (7) eintreten zu lassen, sodass die Stoffe unter Einsatz des Filtermediums (F) filterbar sind.

## Beschreibung

Die vorliegende Erfindung betrifft eine Topfanordnung, eine Küchenmaschine mit einer Topfanordnung sowie eine Aufsatzvorrichtung zur Verwendung in einer Topfanordnung.

Eine Topfanordnung kann einen Topf aufweisen. Töpfe weisen in der Regel eine an einem unteren Topfende angeordnete Topfbasis und einen sich an die Topfbasis anschließenden Topfmantel auf. Eine der Topfbasis gegenüberliegende Topföffnung des Topfes kann mit einem Topfdeckel abgedeckt werden. Der Topfdeckel kann zudem eine Einfüllöffnung aufweisen, welche einen geringeren Durchmesser als die Topföffnung aufweist. Letzteres ist häufig bei Töpfen zur Verwendung in Küchenmaschinen wie dem Thermomix^{®} der Fall. Die Einfüllöffnung kann zur Zugabe von Lebensmitteln in den Topf geeignet sein.

Töpfe können zum Zubereiten von Lebensmitteln verwendet werden, beispielsweise zum Kochen, Garen, Dünsten, Braten, Frittieren oder dergleichen (Kochanwendungen). Auch können Töpfe zum Erhitzen von Flüssigkeiten wie Wasser, Öl etc. eingesetzt werden (ebenfalls Kochanwendungen). Dazu wird ein Topf in der Regel auf eine Energiequelle (z. B. eine Herdplatte) aufgesetzt und von unten geheizt. Sofern die Topföffnung des Topfes nicht mit einem Topfdeckel abgedeckt bzw. verschlossen ist, so können Dämpfe oder Gerüche oft ungehindert aus dem Topf aufsteigen und sich in der Umgebung verteilen. Dies kann zu ungewünschten Geruchsbelästigungen oder Dampfabsonderungen in der Umgebung führen. Denn bestimmte Lebensmittel oder Flüssigkeiten, sondern beim Kochen, Garen, Dünsten, Braten, Frittieren oder dergleichen unangenehme Gerüche ab. Gleichsam kann auch aufsteigender Wasserdampf an Küchenbauteilen in der Umgebung des Topfes kondensieren und sich dort in Form von flüssigem Wasser ansammeln. Dies kann bei metallischen Bauteilen zu ungewünschter Korrosion führen.

Mit einer Küchenmaschine können Kochprozesse, Backprozesse, oder allgemein Zubereitungsprozesse von Lebensmitteln automatisiert oder teilautomatisiert durchgeführt werden. Auch in Küchenmaschinen werden Töpfe zu den oben beschriebenen Zwecken eingesetzt. Häufig weisen in Küchenmaschinen verwendete Töpfe zusätzliche Funktionselemente wie rotierbare Messer oder dergleichen auf, die mit der Küchenmaschine zusammenwirken. Die beschriebene Problematik der Geruchsbelästigung und Wasserdampfkondensation in der Umgebung tritt auch bei in Küchenmaschinen verwendeten Töpfen auf.

Somit liegt der vorliegenden Erfindung die Aufgabe zugrunde, eine Topfanordnung und eine Küchenmaschine bereitzustellen, mit der geringere Geruchsbelästigungen gewährleistet werden und eine ungewünschte Wasserdampfkondensation in der Umgebung vermieden wird.

Zur Lösung dieser Aufgabe wird eine Topfanordnung mit den Merkmalen des Anspruchs 1, eine Küchenmaschine mit den Merkmalen des Anspruchs 11 und eine Aufsatzvorrichtung mit den Merkmalen des Anspruchs 12 vorgeschlagen.

Es ist darauf hinzuweisen, dass die in den Ansprüchen einzeln aufgeführten Merkmale in beliebiger, technisch sinnvoller Weise miteinander kombiniert werden können (auch über Kategoriegrenzen hinweg) und weitere Ausgestaltungen der Erfindung aufzeigen. Die Beschreibung charakterisiert und spezifiziert die Erfindung insbesondere im Zusammenhang mit den Figuren zusätzlich. Beispielsweise können alle in der Beschreibung genannten Merkmale sowohl mit der Topfanordnung als auch mit der Küchenmaschine als auch mit der Aufsatzvorrichtung kombinierbar sein.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Die Erfindung betrifft zunächst eine Topfanordnung, beispielsweise für eine Küchenmaschine, umfassend einen Topf mit einer Topföffnung. Die Topfanordnung zeichnet sich aus durch eine Aufsatzvorrichtung, die dazu ausgebildet ist, auf die Topföffnung aufgesetzt zu werden. Dies kann gewichtskraftbasiert erfolgen, beispielsweise durch Aufliegen auf einem Topfdeckel oder einem oberen Rand des Topfes.

Unter einem "Aufsetzen der Aufsatzvorrichtung auf die Topföffnung" kann somit ein Aufsetzen der Aufsatzvorrichtung auf den Topf (z.B. einen oberen Rand des Topfes), oder auf einen (auf den Topf aufgesetzten und die Topföffnung zumindest teilweise bedeckenden) Topfdeckel zu verstehen sein.

Dadurch kann eine Befestigung zwischen Aufsatzvorrichtung und Topfdeckel bzw. Topf bereitgestellt werden, gleichsam aber auch durch anderweitige Befestigungsmittel. Die Aufsatzvorrichtung weist eine Filtereinrichtung zum Filtern von Stoffen, beispielsweise Dämpfen, Partikeln und/oder Geruchsstoffen auf. Die Filtereinrichtung umfasst eine mit einem Filtermedium befüllbare Filterkammeranordnung, wobei die Filterkammeranordnung eine Eintrittsöffnung aufweist, die dazu ausgebildet ist, bei einer Verwendung der Topfanordnung in einer Kochanwendung, beispielsweise einem Kochvorgang eines in dem Topf aufgenommenen Lebensmittels, bei der die Aufsatzvorrichtung auf den Topf aufgesetzt ist, Stoffe aus dem Topf in einen durch die Filterkammeranordnung gebildeten Filterraum eintreten zu lassen und die Stoffe unter Einsatz des Filtermediums zu filtern. Das Filtermedium kann den Filterraum zumindest teilweise ausfüllen.

Der Topfdeckel kann eine, insbesondere zentriert angeordnete, Einfüllöffnung aufweisen. Dabei weist die Einfüllöffnung vorzugsweise einen geringeren Durchmesser auf als der Topfdeckel.

Die Aufsatzvorrichtung kann dazu ausgebildet sein, auf dem eine Einfüllöffnung aufweisenden Topfdeckel oder einem oberen Rand des Topfes aufgesetzt zu werden. An dem oberen Rand des Topfes können Strukturen (z. B. ein umlaufender Flansch, eine umlaufende Nut etc.) vorgesehen sein, auf welcher die Aufsatzvorrichtung aufgesetzt werden kann.

Bevorzugt umfasst die Aufsatzvorrichtung eine Dichtungseinrichtung zur Bereitstellung einer nach außen hin dichten Verbindung zwischen der Aufsatzvorrichtung und dem Topf bzw. Topfdeckel (je nachdem ob die Aufsatzvorrichtung auf den Topf oder den Topfdeckel aufgesetzt wird). Hierdurch kann verhindert werden, dass Stoffe aus dem Topf an der Aufsatzvorrichtung vorbei nach außen strömen und ungefiltert an die Umgebung abgegeben werden.

Die Aufsatzvorrichtung kann einen Boden umfassen (also aufweisen). Der Boden kann einen Dichtbereich aufweisen. Der Dichtbereich des Bodens kann komplementär zu dem Topfdeckel ausgebildet und zur Ausbildung einer Kontaktfläche zwischen Aufsatzvorrichtung und Topfdeckel flächig in Kontakt mit dem Topfdeckel bringbar sein. Der Dichtbereich des Bodens kann ringförmig ausgebildet sein. Der Dichtbereich des Bodens kann um die Eintrittsöffnung umlaufend ausgebildet sein. Der Dichtbereich des Bodens bzw. die Kontaktfläche kann im auf den Topfdeckel aufgesetzten Zustand um die Einfüllöffnung umlaufend ausgebildet sein. Der Dichtbereich des Bodens kann in radialer Richtung eine Ausdehnung von mindestens 0,5 cm und/oder höchstens 10 cm aufweisen.

Der Dichtbereich kann durch den gesamten Boden oder wie beschrieben einen Abschnitt des Bodens bereitgestellt sein. Sofern der Dichtbereich durch den gesamten Boden bereitgestellt ist, kann der Boden vollständig in vollflächigen Kontakt mit dem Topfdeckel bringbar sein.

Die Dichtungseinrichtung kann den Dichtbereich des Bodens umfassen.

Die Aufsatzvorrichtung kann mindestens einen Steg aufweisen. Der Steg kann auf den Topfdeckel oder den Rand (oder ein anderweitiges Strukturelement) des Topfes aufsetzbar sein. Die Aufsatzvorrichtung kann genau einen Steg oder genau zwei oder mehrere Stege aufweisen. Der Steg oder einer der Stege kann dazu ausgebildet sein, in die Einfüllöffnung eingesteckt zu werden. Hierdurch kann eine radiale Sicherung der Aufsatzvorrichtung auf dem Topfdeckel erzielbar sein. Der mindestens eine Steg kann bevorzugt auch als Kragen bezeichnet werden.

Der mindestens eine Steg kann von dem Boden der Aufsatzvorrichtung hervorspringen, vorzugsweise nach unten. Der mindestens eine Steg kann eine Stirnfläche aufweisen, die dem Boden der Aufsatzvorrichtung abgewandt sein kann.

Die Dichtungseinrichtung kann den Steg umfassen.

Der Steg kann passend zu dem Topfdeckel ausgebildet sein, so dass er zur Ausbildung einer Kontaktfläche zwischen Aufsatzvorrichtung und Topfdeckel bzw. Topf dichtend in Kontakt mit dem Topfdeckel bzw. dem Topf bringbar ist. Der Steg kann ringförmig sein. Der Steg kann um die Eintrittsöffnung umlaufend ausgebildet sein. Der Steg bzw. die Kontaktfläche kann im auf den Topfdeckel aufgesetzten Zustand der Aufsatzvorrichtung um die Einfüllöffnung umlaufend ausgebildet sein. Der mindestens eine Steg kann in radialer Richtung jeweils eine Breite bzw. Dicke von mehr als 0,5 mm und/oder weniger als 0,5 cm oder 5 cm aufweisen.

Wenn genau zwei oder mehrere Stege vorgesehen sind, können diese konzentrisch zueinander ausgebildet sein.

Durch den mindestens einen Steg kann, z. B. verglichen mit einer Ausführungsform, bei welcher der Dichtbereich unmittelbar durch den Boden verwirklicht ist, die Kontaktfläche zwischen Aufsatzvorrichtung und Topfdeckel reduzierbar sein. Der hierdurch erhöhte auf die Kontaktfläche wirkende Druck kann die Dichtwirkung erhöhen bzw. die erforderliche Fertigungsgenauigkeit des Topfdeckels bzw. der Aufsatzvorrichtung zur Erzielung der gewünschten Dichtwirkung verringern. Zudem kann ein Nachlassen der Dichtwirkung über die Lebensdauer der Aufsatzvorrichtung vermieden oder verringert werden. Denn der erhöhte auf die Kontaktfläche wirkende Druck kann eine Verformung des Stegs und/oder Topfdeckels begünstigen, die ein Umlaufen der Kontaktfläche um die Eintrittsöffnung im auf den Topfdeckel aufgesetzten Zustand der Aufsatzvorrichtung auch bei einer durch Fertigungsungenauigkeit und/oder Gebrauch hervorgerufenen Abweichung von der passenden Ausgestaltung des Stegs zu dem Topfdeckel aufrechterhält.

Die Erhöhung der Dichtwirkung bzw. das Vermeiden des Nachlassens der Dichtwirkung ist insbesondere bei einer Ausführungsform vorteilhaft, bei der das Filtermedium Wasser umfasst oder durch Wasser gebildet ist. Denn bei dieser Ausführungsform kann der auf die Stoffe aus dem Topf, z. B. Wasserdampf, wirkende Druck, der erforderlich ist, um diese Stoffe unter Einsatz des Filtermediums zu filtern, erhöht sein, was höhere Anforderungen an die Abdichtung der Aufsatzvorrichtung zu dem Topf bzw. Topfdeckel stellt.

Bevorzugt ist die Eintrittsöffnung in dem Boden der Aufsatzvorrichtung angeordnet. Weiter bevorzugt entspringt von dem Rand der Eintrittsöffnung eine Kammerwand.

Das Filtermedium kann auch als Rückhalte oder Absorptionsmedium verstanden werden, welches Stoffe aufnimmt/auffängt bzw. absorbiert. Dadurch und/oder durch eine Filterung wird eine etwaige Geruchsbelästigung der Umgebung vermieden oder verringert. Ferner kann aufsteigender Wasserdampf in der Filtereinrichtung angesammelt und/oder kondensiert werden und gegebenenfalls in den Topf zurückgeführt werden. Ein Aufsteigen von Wasserdampf nach außerhalb des Topfes wird somit samt einer damit einhergehenden ungewünschten Kondensation an Küchenkomponenten in der Umgebung vermieden oder verringert. Wasserdampf kann auch von dem Filtermedium gebunden, absorbiert oder zurückgehalten werden.

Die Filterkammeranordnung bzw. die zugehörigen Filterkammern oder die zugehörige Filterkammer können bzw. kann derart angeordnet sein, dass bei über ein vorbestimmtes Maß hinausgehender Ansammlung von Flüssigkeit (z. B. in der Filtereinrichtung kondensierendem oder sich ansammelnden Wasser) ein Rücklauf der Flüssigkeit in Richtung des Topfes gewährleistet wird, zum Beispiel über die Eintrittsöffnung.

Weitere Ausgestaltungen der Erfindung sind in den Unteransprüchen angegeben. So kann nach einer Ausgestaltung der Erfindung vorgesehen sein, dass die Aufsatzvorrichtung eine Druckausgleichsöffnung aufweist, wobei die Druckausgleichsöffnung bei auf den Topf aufgesetzter Aufsatzvorrichtung vorzugsweise an einer der Topföffnung gegenüberliegenden Seite der Aufsatzvorrichtung angeordnet ist. Die Druckausgleichsöffnung kann bevorzugt auch als Austrittsöffnung bezeichnet werden. Es können auch mehrere Druckausgleichsöffnungen vorgesehen sein, die beispielsweise umlaufend auf einer Oberseite der Aufsatzvorrichtung angeordnet sind. Die mehreren Druckausgleichsöffnungen können jeweils die Form eines Langlochs, eines Rundlochs, eines polygonalen Lochs oder dergleichen aufweisen. Auch können die Druckausgleichsöffnungen schlitzartig ausgebildet sein.

Bevorzugt stellt die Druckausgleichsöffnung eine Verbindung her, zwischen der Atmosphäre und einem Bereich des Filterraums bzw. einem Bereich oder Teil der Filterkammer.

Nach einer weiteren Ausgestaltung der Erfindung kann vorgesehen sein, dass die Filterkammeranordnung mindestens eine, vorzugsweise mehrere, mit Filtermedium befüllbare Filterkammer umfasst. Bei einer Kochanwendung (z. B. Kochen, Garen, Dünsten, Braten, Frittieren) ist die eine oder sind die mehreren Filterkammern vorzugsweise mit Filtermedium befüllt. Die Filterkammern oder die Filterkammer können bzw. kann bis zu einem bestimmten Level mit Filtermedium befüllt sein, es muss also nicht das vollständige Volumen der einen oder mehreren Filterkammer(n) mit Filtermedium befüllt sein.

Die Filterkammer oder die Filterkammern kann bzw. können um die Eintrittsöffnung herum angeordnet sein. Die Filterkammeranordnung kann mehrere Filterkammern oder genau eine Filterkammer umfassen. Die Filterkammer kann mit Filtermedium befüllbar sein. Der Filterraum kann durch die mindestens eine Filterkammer gebildet sein.

Nach einer weiteren Ausgestaltung der Erfindung kann vorgesehen sein, dass die Filterkammeranordnung zwei konzentrisch um die Eintrittsöffnung herum, und vorzugsweise in Radialrichtung hintereinander angeordnete Filterkammern umfasst.

Nach einer weiteren Ausgestaltung der Erfindung kann vorgesehen sein, dass das Filtermedium eine Flüssigkeit, ein Feststoff, ein Gel, oder eine Paste ist. Das Filtermedium kann Wasser sein. Das Filtermedium kann auch ein wasserziehendes Medium sein, z. B. Silikagel oder Silikakugeln. Das Filtermedium kann aus einem Naturstoff, einem anorganischen oder organischen Stoff gebildet sein. Das Filtermedium kann synthetischer Natur sein. Das Filtermedium kann Zellstoff sein oder Zellstoff umfassen.

Bevorzugt ist der Filterraum und/oder die mindestens eine Filterkammer wasserdicht ausgestaltet. Hiermit ist insbesondere gemeint, dass bei vorgesehener Benutzungslage der Aufsatzvorrichtung der Filterraum und/oder die mindestens eine Filterkammer mit Wasser befüllbar ist, ohne dass das Wasser herausläuft oder heraustropft. Bevorzugt ist der Filterraum bzw. die mindestens eine Filterkammer ein zumindest teilweise mit Wasser befüllbarer Behälter.

Nach einer weiteren Ausgestaltung der Erfindung kann vorgesehen sein, dass die Filterkammeranordnung eine Leitvorrichtung umfasst, die dazu eingerichtet ist, Stoffe aus dem Topf auf das Filtermedium bzw. durch das Filtermedium zu leiten.

Die Leitvorrichtung kann dazu eingerichtet sein, Stoffe aus dem Topf, z. B. Wasserdampf, in den vorzugsweise wasserdicht ausgestalteten Filterraum und/oder die mindestens eine vorzugsweise wasserdicht ausgestaltete Filterkammer zu leiten.

Die Leitvorrichtung kann dazu eingerichtet sein, Stoffe aus dem Topf, z. B. Wasserdampf, zu diesem Zweck umzulenken, bevorzugt um mehr als 90 Grad, z. B. um etwa 180 Grad. Hierdurch können die meist vertikal aus dem Topf aufsteigenden Stoffe gut auf bzw. durch das Wasser umfassende Filtermedium leitbar sein. Bevorzugt ist die Leitvorrichtung dazu eingerichtet, die Hauptströmungsrichtung der Stoffe aus dem Topf um mehr als 90 Grad, z. B. um etwa 180 Grad, umzulenken. Die Leitvorrichtung kann dazu eingerichtet sein, Stoffe aus dem Topf, z. B. Wasserdampf, bzw. die Hauptströmungsrichtung der Stoffe aus dem Topf genau einmal oder genau zweimal oder mehrfach umzulenken.

Aufsteigende Stoffe aus dem Topf, z. B. Wasserdampf, können mit Hilfe der Leitvorrichtung bezüglich ihrer Hauptströmungsrichtung um mehr als 90 Grad insbesondere auf die Wasseroberfläche umlenkbar sein. Die Stoffe aus dem Topf können an der Wasseroberfläche und/oder in dem Wasser vollständig oder teilweise kondensieren und/oder herausgefiltert werden.

Nach einer weiteren Ausgestaltung der Erfindung kann vorgesehen sein, dass die Aufsatzvorrichtung durch ein oberes Teil und ein unteres Teil gebildet ist, wobei das untere Teil die mindestens eine Filterkammer bereitstellt und das obere Teil die Leitvorrichtung bereitstellt. Bevorzugt umfasst der untere Teil der Aufsatzvorrichtung den Boden der Aufsatzvorrichtung. Insbesondere in der Ausführungsform mit genau einer Filterkammer kann der untere Teil der Aufsatzvorrichtung kranzförmig sein, mit insbesondere kaminartiger Öffnung in der Mitte, z. B. ähnlich einer Backform eines Gugelhupfes. Die insbesondere kaminartige Öffnung in der Mitte kann die Eintrittsöffnung und eine von dem Rand der Eintrittsöffnung entspringende Kammerwand umfassen. Die Kammerwand kann hohlzylindrisch sein. Die Kammerwand kann sich verjüngen, also die Form eines hohlen Kegelstumpfes aufweisen.

Nach einer weiteren Ausgestaltung der Erfindung kann vorgesehen sein, dass das obere Teil und das untere Teil separate Bauteile sind, oder dass das obere Teil und das untere Teil ein einteilig gefertigtes Bauteil bereitstellen. Im Falle einer separaten Ausbildung des oberen und unteren Teils, können diese Teile ineinander verschachtelbar sein.

Die Aufsatzvorrichtung kann dazu eingerichtet sein, vor jeder Benutzung mit neuem Filtermedium gefüllt zu werden und/oder nach jeder Benutzung von Filtermedium entleert zu werden. Hierdurch kann die Aufsatzvorrichtung besonders hygienisch sein. Zu diesem Zweck und/oder um das Innere der Aufsatzvorrichtung einer regelmäßigen Reinigung zugänglich zu machen, kann die Aufsatzvorrichtung einen werkzeuglos bedienbaren Verschluss zur Verbindung des oberen Teils der Aufsatzvorrichtung mit dem unteren Teil umfassen. Das obere Teil und das untere Teil können mittels des Verschlusses form- und/oder kraftschlüssig miteinander verbindbar sein. Der Verschluss kann ein Bajonettverschluss sein. Hierzu kann ein Vorsprung des oberen oder unteren Teils in eine Aussparung des anderen Teils steckbar oder einführbar sein und die Teile durch anschließendes gegeneinander verdrehen miteinander verbindbar sein. Auch z. B. ein Schraubverschluss ist denkbar.

Nach einer weiteren Ausgestaltung der Erfindung kann vorgesehen sein, dass die Leitvorrichtung mindestens eine Leitwand umfasst, die in die mindestens eine Filterkammer hineinragt. Bei teilweise mit Wasser gefüllter Filterkammer kann die Leitwand teilweise in dem Wasser angeordnet sein und teilweise nicht in dem Wasser angeordnet sein. Die Leitwand kann aufsteigende Stoffe leiten. Es kann genau eine Leitwand vorgesehen sein oder genau zwei oder mehr Leitwände.

Nach einer weiteren Ausgestaltung der Erfindung kann vorgesehen sein, dass die mindestens eine Filterkammer Kammerwände aufweist und die mindestens eine Leitwand zusammen mit den Kammerwänden einen labyrinthartigen Weg für die Stoffe aus dem Topf zwischen der Eintrittsöffnung und der Austrittsöffnung vorgeben. Die Kammerwände und/oder die mindestens eine Leitwand kann ringförmig sein. Die mindestens eine Leitwand kann in Form eines ringförmigen Stegs (oder Mantels) an dem oberen Teil der Aufsatzvorrichtung angeformt (bzw. befestigt) sein.

Die Kammerwände können jeweils in Form eines ringförmigen Stegs (oder Mantels) an dem unteren Teil der Aufsatzvorrichtung, insbesondere dem Boden des unteren Teils der Aufsatzvorrichtung, angeformt (bzw. befestigt) sein.

Die mindestens eine Leitwand kann im verbundenen Zustand von oberem Teil und unterem Teil der Aufsatzvorrichtung zwischen zwei Kammerwände ragen. Dabei belässt die mindestes ein Leitwand bevorzugt einen Abstand zu dem Boden des unteren Teils der Aufsatzvorrichtung und weiter bevorzugt einen Abstand zu den Kammerwänden.

Die Filterkammer kann ganz oder teilweise mit Filtermedium gefüllt bzw. füllbar sein.

In der Ausführungsform, in der das Filtermedium Wasser umfasst oder durch Wasser gebildet ist, kann die Aufsatzvorrichtung dazu eingerichtet sein, dass die Filterkammer einen mit Wasser gefüllten Bereich und einen nicht mit Wasser gefüllten Bereich aufweist.

Die Aufsatzvorrichtung kann dazu eingerichtet sein, dass die Leitwand bei teilweise mit Wasser gefüllter Filterkammer von oben in das Wasser hineinragt und den nicht mit Wasser gefüllten Bereich der Filterkammer in einen stromaufwärts angeordneten Teil und einen stromabwärts angeordneten Teil unterteilt, vorzugsweise ohne den mit Wasser gefüllten Bereich der Filterkammer zu unterteilen. Die Begriffe "stromaufwärts" und "stromabwärts" werden im Rahmen dieser Offenbarung insbesondere bezogen auf einen während der Kochanwendung möglichen Strom von Stoffen aus dem Topf zwischen der Eintrittsöffnung und der Austrittsöffnung verwendet. Die Druckausgleichsöffnung kann dabei eine Verbindung zwischen der Atmosphäre und dem stromabwärts angeordneten Teil des nicht mit Wasser gefüllten Bereichs der Filterkammer herstellen. Die Leitwand kann dabei den Wasserspiegel des Wassers in der Filterkammer in einen stromaufwärts angeordneten Teil und einen stromabwärts angeordneten Teil unterteilen.

Insbesondere bei gleichem oder ähnlichem Druck in den beiden Teilen des nicht mit Wasser gefüllten Bereichs der Filterkammer, beispielsweise zu Beginn einer Kochanwendung, kann das Wasser als Geruchsverschluss wirken, ähnlich wie in einem Siphon.

Die Aufsatzvorrichtung kann dazu eingerichtet sein, dass bei durch Stoffe aus dem Topf, z. B. Wasserdampf, hervorgerufenem ansteigendem Druck in dem stromaufwärts angeordneten Teil des nicht mit Wasser gefüllten Bereichs der Filterkammer, der stromaufwärts angeordnete Teil des Wasserspiegels sinkt, vorzugsweise so weit, dass in dem nicht mit Wasser gefüllten Bereich der Filterkammer zwischen der Leitwand und diesem Wasserspiegel eine Öffnung entsteht. Bevorzugt ist die Dichtungseinrichtung hierzu derart dicht gestaltet, dass der hierzu erforderliche Druck in dem stromaufwärts angeordneten Teil des nicht mit Wasser gefüllten Bereichs der Filterkammer erzielbar ist. Der stromabwärts angeordnete Teil des Wasserspiegels kann dabei steigen. Die Aufsatzvorrichtung kann dazu eingerichtet sein, dass Stoffe aus dem Topf, z. B. Wasserdampf, von dem stromaufwärts angeordneten Teil des nicht mit Wasser gefüllten Bereichs der Filterkammer durch diese entstandene Öffnung, die schlitzförmig sein kann, hindurchtreten können und bevorzugt durch das Wasser hindurch strömen. Bevorzugt werden die Stoffe aus dem Topf hierbei zumindest teilweise kondensiert und/oder herausgefiltert. Vorzugsweise treten nicht kondensierte bzw. herausgefilterte Stoffe aus dem Topf, z. B. Wasserdampf, daraufhin in den stromabwärts angeordneten Teil des nicht mit Wasser gefüllten Bereichs der Filterkammer.

Diese nicht kondensierte bzw. herausgefilterte Stoffe aus dem Topf, z. B. Wasserdampf, können aus der Druckausgleichsöffnung austreten oder in eine weitere Filterkammer leitbar sein.

Alternativ oder zusätzlich kann die Aufsatzvorrichtung dazu eingerichtet sein, eine Kondensation bzw. Filterung von Stoffen aus dem Topf an der Wasseroberfläche zu bewirken, bevorzugt an dem Wasserspiegel des in der Filterkammer angeordneten Wassers. Auch ein Eintritt von zu filternden Stoffen an einer Luft-Filtermedium (z.B. Wasser) Grenzfläche in das Filtermedium ist möglich, beispielsweise unter Berücksichtigung physikalischer Gesetzmäßigkeiten wie Absorption, Adsorption und Diffusion.

Die Topfanordnung kann einen Topf umfassen, der eine an einem unteren Topfende angeordnete Topfbasis, einen sich an die Topfbasis anschließenden Topfmantel aufweist. Eine der Topfbasis gegenüberliegende Topföffnung kann mit einem Topfdeckel abgedeckt werden. Der Topfdeckel kann zudem eine Einfüllöffnung aufweisen, welche einen geringeren Durchmesser als die Topföffnung aufweist. Der Topf kann eine in dem Topf, insbesondere in Nähe der Topfbasis, angeordnete, unter Einsatz einer Antriebseinheit rotierbare Rotationseinheit aufweisen. Es kann erfindungsgemäß vorgesehen sein, dass die Eintrittsöffnung der Aufsatzvorrichtung fluchtend oder zumindest nahezu fluchtend zur Einfüllöffnung des Topfdeckels angeordnet ist.

Der Topf kann beheizt sein und/oder eine Heizeinrichtung aufweisen.

Weiterhin betrifft die vorliegende Erfindung eine Küchenmaschine mit einer erfindungsgemäßen Topfanordnung.

Die vorgeschlagene Topfanordnung lässt sich - ohne bauliche Abwandlungen - mit Küchenmaschinen wie dem Thermomix^{®} verwenden. Die Verwendung ist nicht auf Küchenmaschinen wie den Thermomix^{®} beschränkt.

Weiterhin betrifft die vorliegende Erfindung eine Aufsatzvorrichtung, die zur Verwendung in einer Topfanordnung nach einem der Ansprüche 1 bis 10 ausgebildet ist, wobei die Topfanordnung einen Topf mit einer Topföffnung aufweist, wobei die Aufsatzvorrichtung dazu ausgebildet ist, auf die Topföffnung aufgesetzt zu werden, wobei die Aufsatzvorrichtung eine Filtereinrichtung zum Filtern von Stoffen, beispielsweise Dämpfen, Partikeln und/oder Geruchsstoffen aufweist,
die Filtereinrichtung umfassend eine mit einem Filtermedium befüllbare Filterkammeranordnung, wobei die Filterkammeranordnung eine Eintrittsöffnung aufweist, die dazu ausgebildet ist, bei einer Verwendung der Topfanordnung in einer Kochanwendung, beispielsweise einem Kochvorgang eines in dem Topf aufgenommenen Lebensmittels, bei der die Aufsatzvorrichtung auf den Topf aufgesetzt ist, Stoffe aus dem Topf in einen durch die Filterkammeranordnung gebildeten Filterraum eintreten zu lassen, sodass die Stoffe unter Einsatz des Filtermediums filterbar sind.

Die Erfindung wird weiterhin anhand der nachfolgenden Figuren näher erläutert. Diese sind nur beispielhaft zu verstehen und sollen die Erfindung nicht auf die gezeigten Ausführungsbeispiele beschränken.

### Es zeigen:

- Fig. 1: eine teilgeschnittene Darstellung einer Topfanordnung nach einer Ausführungsform der Erfindung;
- Fig. 2: eine perspektivische Darstellung der Topfanordnung aus Fig. 1;
- Fig. 3: eine Darstellung wie in Fig. 2 in Explosionsdarstellung;
- Fig. 4 bis 11: den oberen Teil der Aufsatzvorrichtung aus Fig. 1 in verschiedenen Ansichten;
- Fig. 12 bis 20: den unteren Teil der Aufsatzvorrichtung aus Fig. 1 in verschiedenen Ansichten;
- Fig. 21: eine Querschnittsdarstellung einer Aufsatzvorrichtung einer Topfanordnung nach einer zweiten Ausführungsform der Erfindung;
- Fig. 22 bis 25: den unteren Teil der Aufsatzvorrichtung aus Fig. 21 in verschiedenen Ansichten;
- Fig. 26 bis 29: den oberen Teil der Aufsatzvorrichtung aus Fig. 21 in verschiedenen Ansichten;
- Fig. 30 bis 32: die Aufsatzvorrichtung aus Fig. 21 in verschiedenen Ansichten;
- Fig. 33: eine teilgeschnittene Darstellung einer Topfanordnung nach einer dritten Ausführungsform der Erfindung;
- Fig. 34: eine Explosionsdarstellung der Topfanordnung aus Fig. 33;
- Fig. 35: eine Seitendarstellung der Topfanordnung aus Fig. 33;
- Fig. 36 bis 40: die Aufsatzvorrichtung der Topfanordnung aus Fig. 33 in verschiedenen Ansichten.

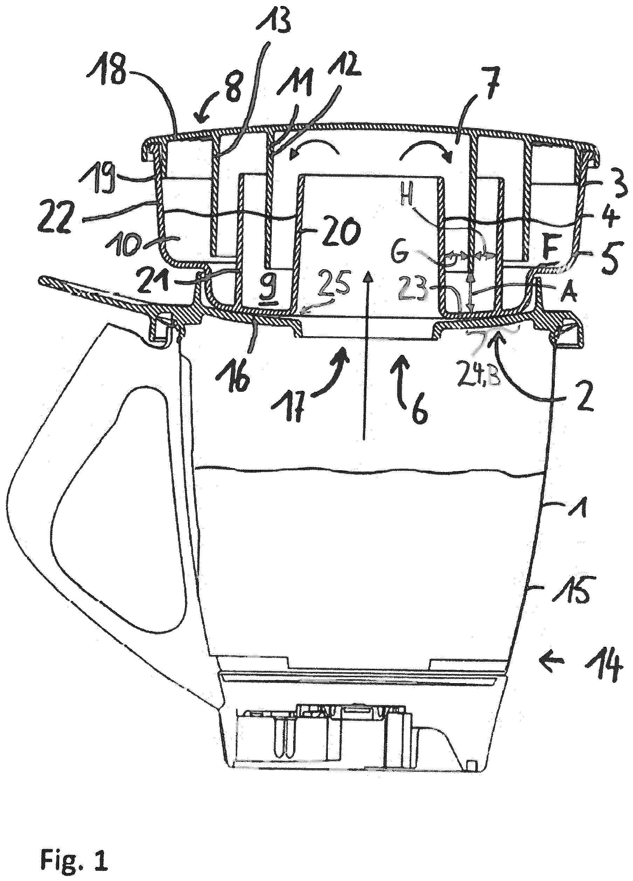

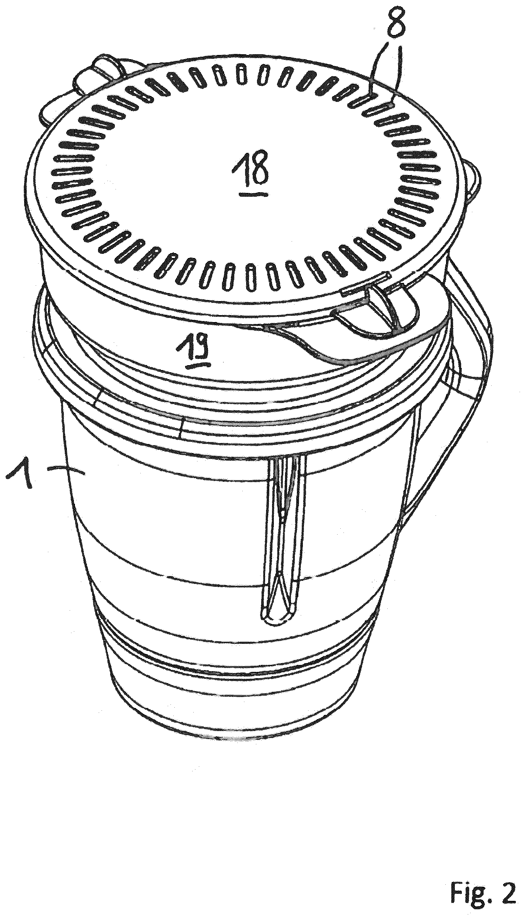

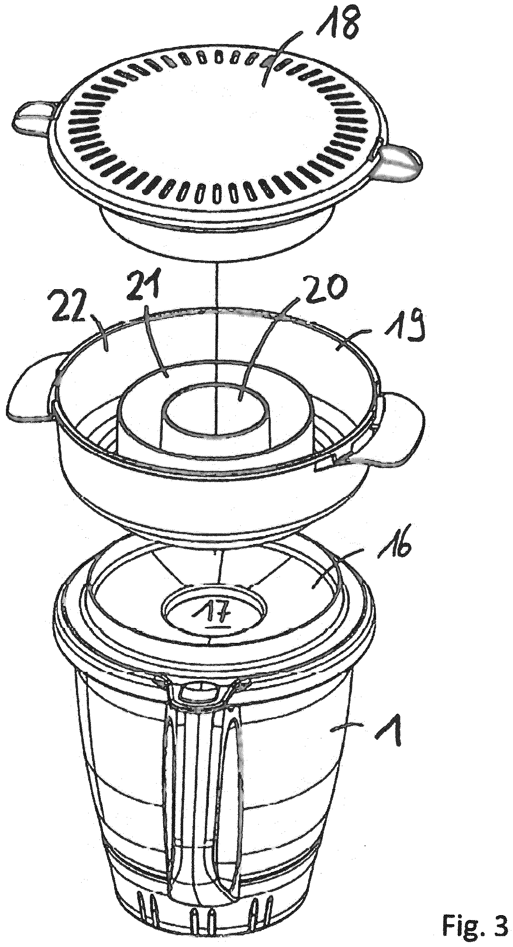

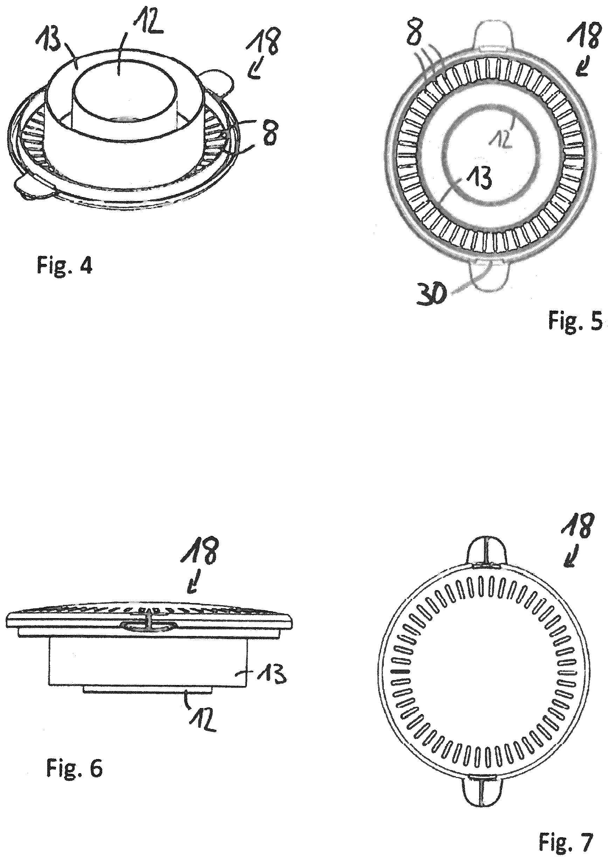

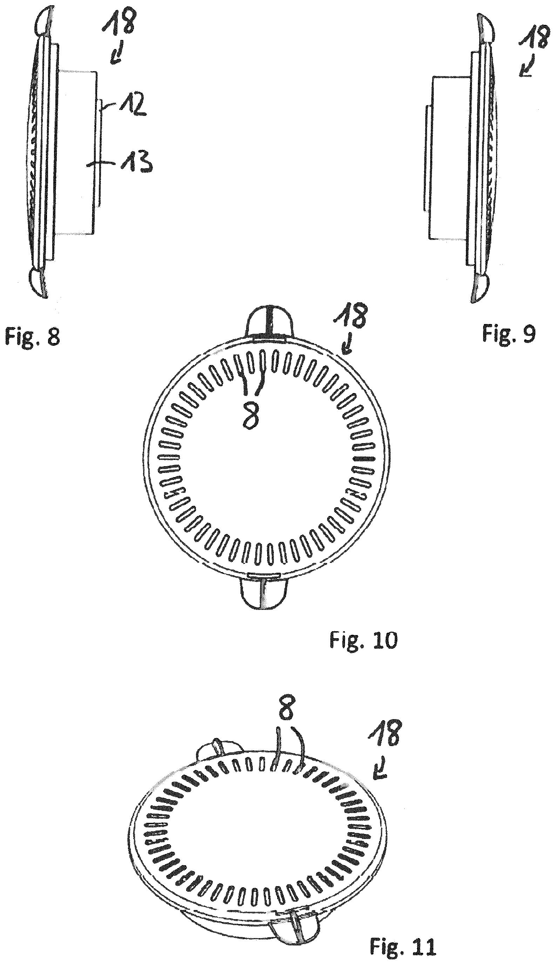

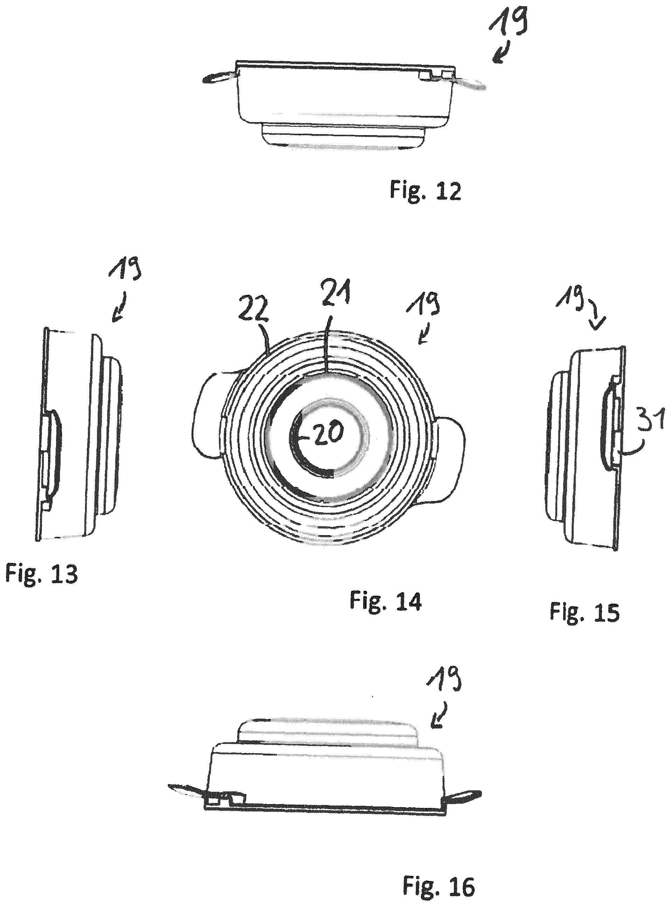

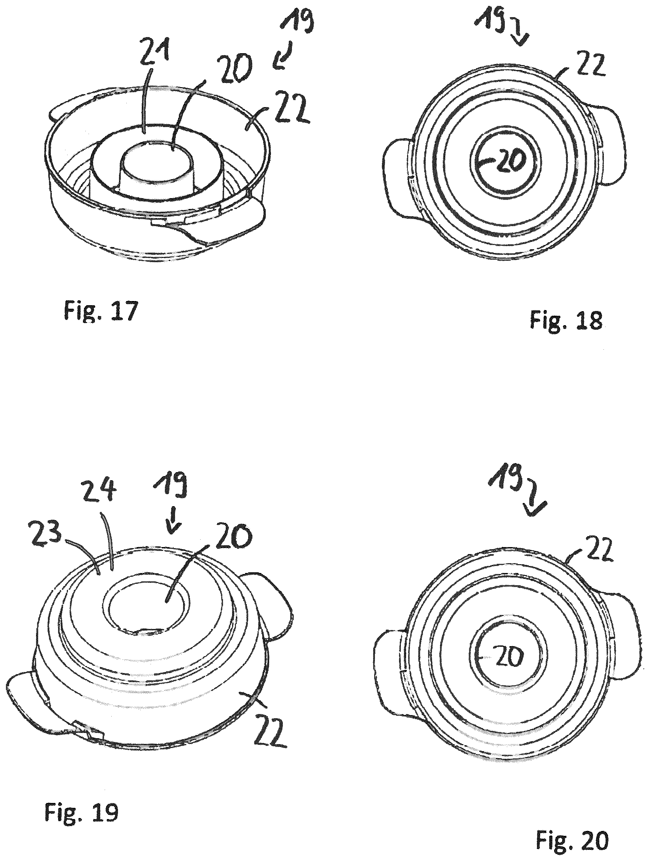

Die Fig. 1 bis 20 zeigen ein erstes Ausführungsbeispiel einer Topfanordnung mit einem ersten Ausführungsbeispiel einer Aufsatzvorrichtung.

Figur 1 zeigt eine Topfanordnung gemäß der vorliegenden Erfindung. Der Topf 1 weist eine an einem unteren Topfende angeordnete Topfbasis 14, einen sich an die Topfbasis 14 anschließenden Topfmantel 15 und einen Topfdeckel 16 auf. Mit dem Topfdeckel 16 ist die Topföffnung 2 verschließbar. Der Topfdeckel 16 weist eine Einfüllöffnung 17 auf, welche einen geringeren Durchmesser als die Topföffnung 2 aufweist.

Somit zeigt Figur 1 also eine Topfanordnung, beispielsweise für eine Küchenmaschine, umfassend einen Topf 1 mit einer Topföffnung 2. Ferner umfasst die Topfanordnung eine Aufsatzvorrichtung 3, die dazu ausgebildet ist, auf die Topföffnung 2 aufgesetzt zu werden (in der Darstellung nach Fig. 1 ist die Aufsatzvorrichtung 3 auf einen die Topföffnung 2 teilweise verschließenden Topfdeckel 16 aufgesetzt). Die Aufsatzvorrichtung 3 weist eine Filtereinrichtung 4 zum Filtern von Stoffen, beispielsweise Dämpfen, Partikeln und/oder Geruchsstoffen auf. Die Filtereinrichtung 4 umfasst eine mit einem Filtermedium F befüllbare Filterkammeranordnung 5 (in Fig. 1 ist ein befüllter Zustand gezeigt), wobei die Filterkammeranordnung 5 eine Eintrittsöffnung 6 aufweist, die dazu ausgebildet ist, bei einer Verwendung der Topfanordnung in einer Kochanwendung, beispielsweise einem Kochvorgang eines in dem Topf 1 aufgenommenen Lebensmittels, bei der die Aufsatzvorrichtung 3 auf den Topf 1 aufgesetzt ist, Stoffe aus dem Topf 1 in einen durch die Filterkammeranordnung 5 gebildeten Filterraum 7 eintreten zu lassen und die Stoffe unter Einsatz des Filtermediums F zu filtern.

Die Figur 1 und/oder die weiteren Figuren zeigen, dass die Aufsatzvorrichtung 3 eine Druckausgleichsöffnung 8 aufweist, wobei die Druckausgleichsöffnung 8 bei auf den Topf 1 aufgesetzter Aufsatzvorrichtung 3 an einer der Topföffnung 2 gegenüberliegenden Seite der Aufsatzvorrichtung 3 angeordnet ist (vgl. insbesondere Fig. 1)

Die Figur 1 zeigt, dass die Filterkammeranordnung 5 mehrere mit Filtermedium F befüllbare Filterkammern 9, 10 umfasst. Ferner zeigen die Figur 1 und/oder die weiteren Figuren, dass die Filterkammeranordnung 5 zwei konzentrisch um die Eintrittsöffnung 6 herum, und in Radialrichtung hintereinander angeordnete Filterkammern 9, 10 umfasst (vgl. insbesondere Fig. 1).

Die Figur 1 und/oder die weiteren Figuren zeigen, dass die Filterkammeranordnung 5 eine Leitvorrichtung 11 umfasst, die dazu eingerichtet ist, Stoffe aus dem Topf auf bzw. durch das Filtermedium F zu leiten.

Die Figur 1 und/oder die weiteren Figuren zeigen, dass die Aufsatzvorrichtung 3 durch ein oberes Teil 18 und ein unteres Teil 19 gebildet ist, wobei das untere Teil 19 die mindestens eine Filterkammer 9, 10 bereitstellt und das obere Teil 18 die Leitvorrichtung 11 bereitstellt. Bei der gezeigten Ausführungsvariante sind die Teile 18, 19 (oberes Teil 18 + unteres Teil 19) separate Bauteile.

Die Figur 1 und/oder die weiteren Figuren zeigen, dass die Leitvorrichtung 11 mindestens eine Leitwand 12, 13 umfasst, die in die mindestens eine Filterkammer 9, 10 hineinragt.

Die mindestens eine Leitwand 12, 13 ragt im verbundenen Zustand von oberem Teil 18 und unterem Teil 19 der Aufsatzvorrichtung 3 zwischen zwei Kammerwände 20, 21; 21, 22. Dabei belässt die mindestes ein Leitwand 12, 13 einen Abstand A zu dem Boden 23 des unteren Teils der Aufsatzvorrichtung und weiter bevorzugt einen Abstand G, H zu den Kammerwänden.

Wie in Figur 1 gezeigt, weist die Leitvorrichtung 11 bei dieser Ausführungsform zwei Leitwände 12, 13 auf, die in Radialrichtung hintereinander und beabstandet zueinander angeordnet sind, wobei die Leitwände 12, 13 jeweils in Form eines ringförmigen Stegs (oder Mantels) an eine Oberseite des oberen Teils 18 angeformt (bzw. befestigt) sind. Die ringförmigen Stege ragen in den Filterraum 7 - und wie zuvor erwähnt in die mindestens eine Filterkammer 9, 10 - in Richtung des Topfes 1 hinein.

Die Figur 1 und/oder die weiteren Figuren zeigen, dass die mindestens eine Filterkammer 9, 10 Kammerwände 20, 21, 22 aufweist und die mindestens eine Leitwand 12, 13 zusammen mit den Kammerwänden 20, 21, 22 einen labyrinthartigen Weg für die Stoffe aus dem Topf 1 zwischen der Eintrittsöffnung 6 und der Druckausgleichsöffnung 8 vorgeben.

Die Eintrittsöffnung 6 ist nach unten einem Innenraum des Topfes 1 zugewandt. Die Eintrittsöffnung 6 verbindet den Innenraum des Topfes 1 mit dem Filterraum 7 bzw. den Filterkammern 9, 10. Die Druckausgleichsöffnungen 8 sind dem Innenraum des Topfes 1 abgewandt.

Die Eintrittsöffnung 6 ist bezogen auf die die Aufsatzvorrichtung 3 mittig bzw. zentriert angeordnet. Die Austrittsöffnung 8 ist bezogen auf die die Aufsatzvorrichtung 3 randseitig angeordnet.

Figur 1 zeigt ferner, dass die Eintrittsöffnung 6 der Aufsatzvorrichtung 3 fluchtend oder nahezu fluchtend zur Einfüllöffnung 17 des Topfdeckels 16 angeordnet ist.

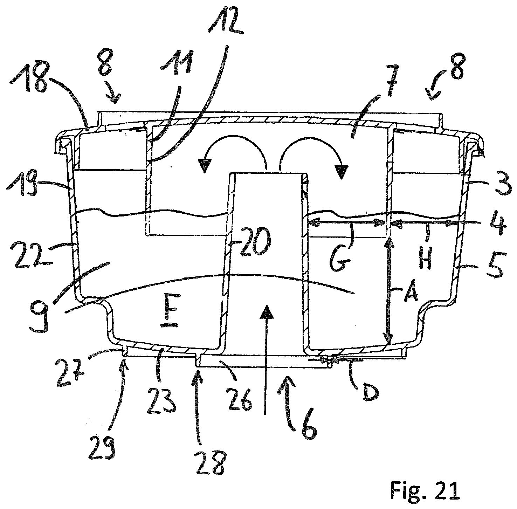

Das Filtermedium F, genauer gesagt das Wasser, dessen Oberfläche in Fig. 1 durch eine gewellte Linie symbolisiert ist, füllt den Filterraum 7 teilweise aus. Die Filterkammern 9, 10 sind bis zu einem bestimmten Level, das in Fig. 1 und 21 durch eine gewellte Linie symbolisiert ist, mit Filtermedium F, nämlich Wasser, teilweise gefüllt.

Die Eintrittsöffnung 6 ist in dem Boden 23 der Aufsatzvorrichtung 3 angeordnet. Von dem Rand der Eintrittsöffnung entspringt eine Kammerwand 20.

Die Aufsatzvorrichtung 3 liegt auf dem Topfdeckel 16 auf und umfasst einen Boden 23, der in dem ersten gezeigten Ausführungsbeispiel einen Dichtbereich 24 aufweist.

Der Dichtbereich 24 des Bodens ist komplementär zu dem Topfdeckel 16 ausgebildet und zur Ausbildung einer Kontaktfläche 25 zwischen Aufsatzvorrichtung 3 und Topfdeckel 16 flächig in Kontakt mit dem Topfdeckel 16 bringbar (Fig. 1). Der Dichtbereich 24 des Bodens 23 ist ringförmig und um die Eintrittsöffnung 6 umlaufend ausgebildet. Der Dichtbereich 24 des Bodens 23 und die Kontaktfläche 25 ist im in Fig. 1 gezeigten auf dem Topfdeckel 16 aufgesetzten Zustand der Aufsatzvorrichtung 3 um die Einfüllöffnung 17 umlaufend ausgebildet. Der Dichtbereich 24 des Bodens weist in radialer Richtung eine Ausdehnung B von mindestens 0,5 cm und/oder höchstens 10 cm auf.

Der Filterraum 7 bzw. die mindestens eine Filterkammer 9, 10 ist wasserdicht ausgestaltet.

Das obere Teil 18 und das untere Teil 19 sind mittels eines Bajonettverschlusses miteinander verbindbar. Hierzu ist ein Vorsprung 30 des oberen Teils in eine Aussparung 31 des unteren Teils 19 steckbar oder einführbar und die Teile 18, 19 sind durch anschließendes gegeneinander verdrehen miteinander verbindbar.

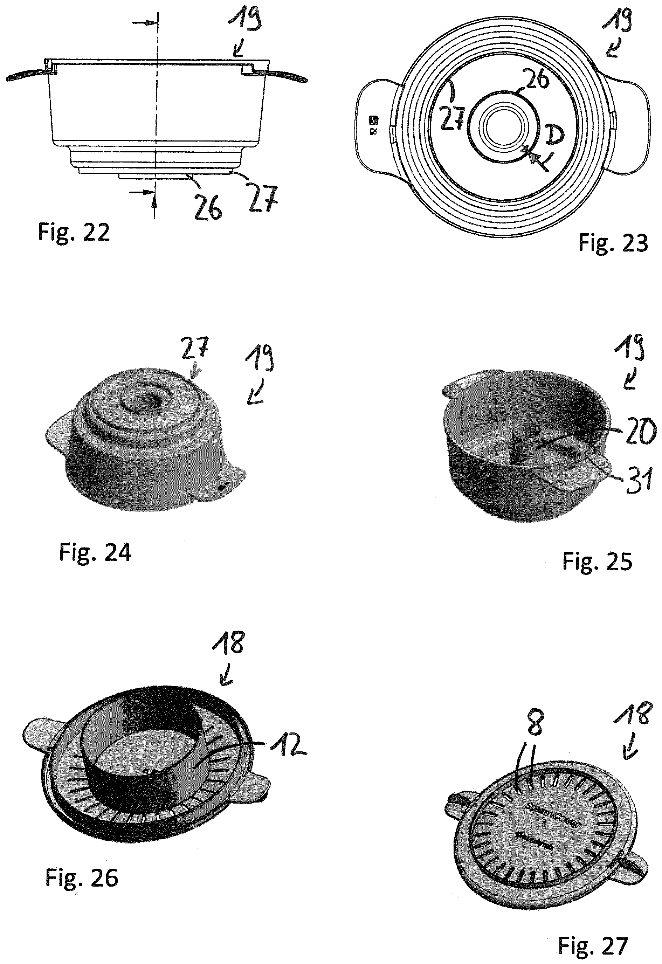

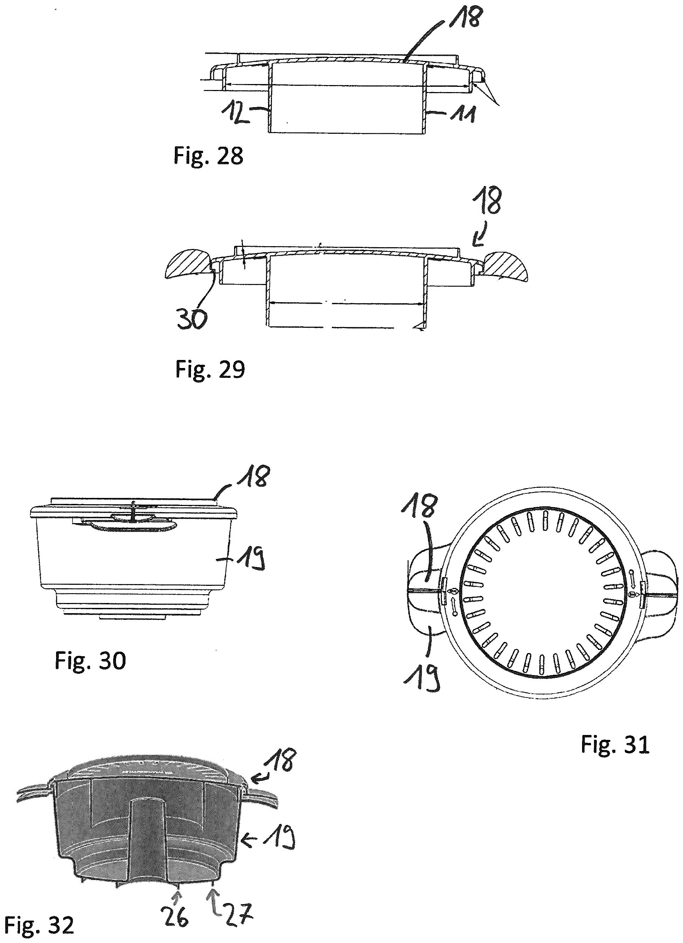

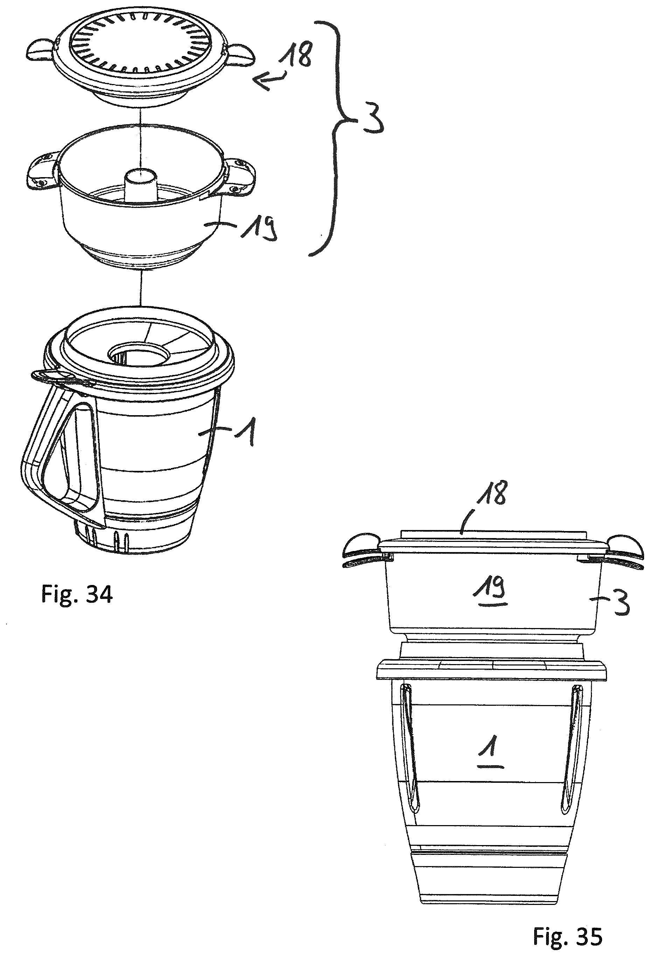

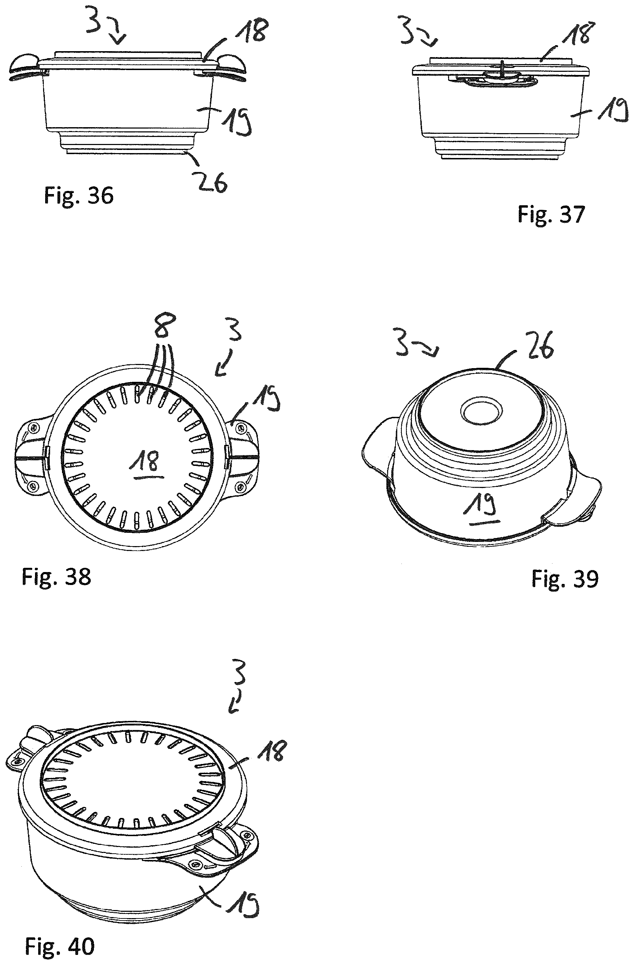

In den Fig. 21 bis 40 sind weitere Ausführungsbeispiele der Topfanordnung bzw. der Aufsatzvorrichtung gezeigt. Gleiche Bezugszeichen bezeichnen dabei gleiche

Komponenten. Insofern wird auf die obige Beschreibung verwiesen. Im Folgenden werden lediglich Unterschiede der Ausführungsbeispiele dargestellt.

Die Aufsatzvorrichtung 3 des in Fig. 21 gezeigten zweiten Ausführungsbeispiels weist mindestens einen Steg 26, 27 auf, der auf den Topfdeckel 16 aufstellbar ist (der Topfdeckel ist in Fig. 21 nicht dargestellt).

Der mindestens eine Steg 26, 27 springt von dem Boden 23 der Aufsatzvorrichtung nach unten hervor. Der mindestens eine Steg 26, 27 weist eine Stirnfläche 28, 29 auf, die dem Boden 23 der Aufsatzvorrichtung abgewandt ist.

Der mindestens eine Steg ist passend zu dem in Fig. 21 nicht gezeigten Topfdeckel ausgebildet, so dass er zur Ausbildung einer Kontaktfläche zwischen Aufsatzvorrichtung 3 und Topfdeckel 16 dichtend in Kontakt mit dem Topfdeckel 16 bringbar ist.

Der Steg 26, 27 ist ringförmig und um die Eintrittsöffnung 6 umlaufend ausgebildet. Der Steg 26, 27 bzw. die Kontaktfläche ist im auf dem Topfdeckel 16 aufgesetzten Zustand der Aufsatzvorrichtung 3 um die Einfüllöffnung 17 umlaufend ausgebildet.

Der mindestens eine Steg 26, 27 weist in radialer Richtung jeweils eine Breite bzw. Dicke D von mehr als 0,5 mm und/oder weniger als 0,5 cm auf.

Die Aufsatzvorrichtung 3 des zweiten Ausführungsbeispiels weist genauer gesagt zwei Stege 26, 27 auf, die konzentrisch zueinander ausgebildet sind.

Die Filterkammeranordnung 5 umfasst bei dem zweiten Ausführungsbeispiel genau eine Filterkammer 9, die bis zu einem bestimmten Level, das in Fig. 21 durch eine gewellte Linie symbolisiert ist, mit Filtermedium F, nämlich Wasser befüllt ist. Entsprechend ist auch nur genau eine Leitwand 12 vorgesehen. Der untere Teil 19 der Aufsatzvorrichtung 3 ist kranzförmig, mit einer die Eintrittsöffnung 6 und eine von der Eintrittsöffnung 6 entspringende Kammerwand 29 umfassenden kaminartigen Öffnung in der Mitte, ähnlich einer Backform eines Gugelhupfes.

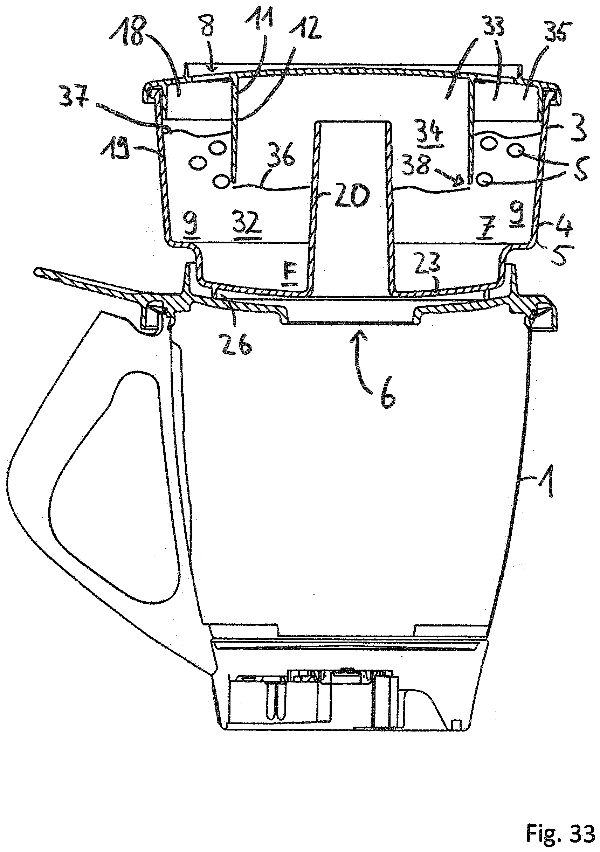

Die Aufsatzvorrichtung 3 des in Fig. 33 gezeigten dritten Ausführungsbeispiels der Topfanordnung unterscheidet sich von dem zweiten Ausführungsbeispiel dadurch, dass sie nur genau einen Steg 26 aufweist.

Nachfolgend wird anhand von Fig. 33 eine mögliche Funktionsweise der Aufsatzvorrichtung 3 beschrieben, die bei allen gezeigten Ausführungsbeispielen denkbar ist: Die Filterkammer 9 ist dabei teilweise mit Filtermedium F, nämlich Wasser, gefüllt. Die Aufsatzvorrichtung 3 ist dabei dazu eingerichtet, dass die Filterkammer 9 einen mit Wasser gefüllten Bereich 32 und einen nicht mit Wasser gefüllten Bereich 33 aufweist. Die Aufsatzvorrichtung 3 ist dabei dazu eingerichtet, dass die Leitwand 12 von oben in das Wasser hineinragt und den nicht mit Wasser gefüllten Bereich 33 der Filterkammer 9 in einen stromaufwärts angeordneten Teil 34 und einen stromabwärts angeordneten Teil 35 unterteilt, ohne den mit Wasser gefüllten Bereich 32 der Filterkammer 9 zu unterteilen. Die Leitwand 12 unterteilt dabei den Wasserspiegel des Wassers in der Filterkammer 9 in einen stromaufwärts angeordneten Teil 36 und einen stromabwärts angeordneten Teil 37. Bei in Fig. 33 nicht gezeigtem gleichem oder ähnlichem Druck in den beiden Teilen 34, 35 des nicht mit Wasser gefüllten Bereichs der Filterkammer wirkt das Wasser dabei als Geruchsverschluss, ähnlich wie in einem Siphon. Die Aufsatzvorrichtung 3 ist dabei dazu eingerichtet, dass bei durch Stoffe S aus dem Topf, z. B. Wasserdampf, hervorgerufenem ansteigendem Druck in dem stromaufwärts angeordneten Teil 34 des nicht mit Wasser gefüllten Bereichs der Filterkammer, der stromaufwärts angeordneten Teil 36 des Wasserspiegels sinkt, insbesondere so weit, dass in dem nicht mit Wasser gefüllten Bereich 33 der Filterkammer zwischen der Leitwand 12 und diesem Wasserspiegel 36 eine schlitzförmige Öffnung 38 entsteht. Der stromabwärts angeordneten Teil 37 des Wasserspiegels steigt dabei. Die Aufsatzvorrichtung ist dabei dazu eingerichtet, dass Stoffe S aus dem Topf, z. B. Wasserdampf, von dem stromaufwärts angeordneten Teil 34 des nicht mit Wasser gefüllten Bereichs 33 der Filterkammer durch diese entstandene schlitzförmige Öffnung 38 hindurchtreten können und durch das Wasser hindurch strömen. Hierbei werden die Stoffe dabei aus dem Topf zumindest teilweise kondensiert und/oder herausgefiltert. Nicht kondensierte bzw. herausgefilterte Stoffe aus dem Topf, z. B. Wasserdampf treten dabei daraufhin in den stromabwärts angeordneten Teil des nicht mit Wasser gefüllten Bereichs 35 der Filterkammer. Diese nicht kondensierte bzw. herausgefilterte Stoffe aus dem Topf, z. B. Wasserdampf, können dabei aus der Druckausgleichsöffnung 8 austreten (Fig. 33) oder in eine weitere Filterkammer leitbar sein (Fig. 1).

Bei allen gezeigten Ausführungsbeispielen ist die Aufsatzvorrichtung 3 zur Verwendung in einer Topfanordnung ausgebildet, wobei die Topfanordnung einen Topf 1 mit einer Topföffnung 2 aufweist. Und die Aufsatzvorrichtung 3 ist dazu ausgebildet, auf die Topföffnung 2 aufgesetzt zu werden, wobei die Aufsatzvorrichtung 3 eine Filtereinrichtung 4 zum Filtern von Stoffen, beispielsweise Dämpfen, Partikeln und/oder Geruchsstoffen aufweist, die Filtereinrichtung 4 umfassend eine mit einem Filtermedium F befüllbare Filterkammeranordnung 5, wobei die Filterkammeranordnung 5 eine Eintrittsöffnung 6 aufweist, die dazu ausgebildet ist, bei einer Verwendung der Topfanordnung in einer Kochanwendung, beispielsweise einem Kochvorgang eines in dem Topf 1 aufgenommenen Lebensmittels, bei der die Aufsatzvorrichtung 3 auf den Topf 1 aufgesetzt ist, Stoffe aus dem Topf 1 in einen durch die Filterkammeranordnung 5 gebildeten Filterraum 7 eintreten zu lassen, sodass die Stoffe unter Einsatz des Filtermediums F filterbar sind.

### Bezugszeichenliste

- 1: Topf
- 2: Topföffnung
- 3: Aufsatzvorrichtung
- 4: Filtereinrichtung
- 5: Filterkammeranordnung
- 6: Eintrittsöffnung
- 7: Filterraum
- 8: Druckausgleichsöffnung
- 9: Filterkammer
- 10: Filterkammer
- 11: Leitvorrichtung
- 12: Leitwand
- 13: Leitwand
- 14: Topfbasis
- 15: Topfmantel
- 16: Topfdeckel
- 17: Einfüllöffnung
- 18: oberes Teil der Aufsatzvorrichtung
- 19: unteres Teil der Aufsatzvorrichtung
- 20: Kammerwand
- 21: Kammerwand
- 22: Kammerwand
- 23: Boden
- 24: Dichtbereich des Bodens
- 25: Kontaktfläche
- 26: Steg
- 27: Steg
- 28: Stirnfläche
- 29: Stirnfläche
- 30: Vorsprung
- 31: Aussparung
- 32: mit Wasser gefüllter Bereich der Filterkammer
- 33: nicht mit Wasser gefüllter Bereich der Filterkammer
- 34: stromaufwärts angeordneter Teil des nicht mit Wasser gefüllten Bereichs der Filterkammer
- 35: stromabwärts angeordneter Teil des nicht mit Wasser gefüllten Bereichs der Filterkammer
- 36: stromaufwärts angeordneter Teil des Wasserspiegels
- 37: stromabwärts angeordneter Teil des Wasserspiegels

- A: Abstand
- B: Ausdehnung des Dichtbereichs des Bodens
- D: Dicke des Stegs
- F: Filtermedium
- G: Abstand
- H: Abstand
- S: Stoffe aus dem Topf

## Patentansprüche

1. Topfanordnung, beispielsweise für eine Küchenmaschine, umfassend einen Topf (1) mit einer Topföffnung (2)
**gekennzeichnet durch** eine Aufsatzvorrichtung (3), die dazu ausgebildet ist, auf die Topföffnung (2) aufgesetzt zu werden, wobei die Aufsatzvorrichtung (3) eine Filtereinrichtung (4) zum Filtern von Stoffen, beispielsweise Dämpfen, Partikeln und/oder Geruchsstoffen aufweist,
die Filtereinrichtung (4) umfassend eine mit einem Filtermedium (F) befüllbare Filterkammeranordnung (5), wobei die Filterkammeranordnung (5) eine Eintrittsöffnung (6) aufweist, die dazu ausgebildet ist, bei einer Verwendung der Topfanordnung in einer Kochanwendung, beispielsweise einem Kochvorgang eines in dem Topf (1) aufgenommenen Lebensmittels, bei der die Aufsatzvorrichtung (3) auf den Topf (1) aufgesetzt ist, Stoffe aus dem Topf (1) in einen **durch** die Filterkammeranordnung (5) gebildeten Filterraum (7) eintreten zu lassen, sodass die Stoffe unter Einsatz des Filtermediums (F) filterbar sind.

2. Topfanordnung nach Anspruch 1,
**dadurch gekennzeichnet, dass**
die Aufsatzvorrichtung (3) eine Druckausgleichsöffnung (8) aufweist, wobei die Druckausgleichsöffnung (8) bei auf den Topf (1) aufgesetzter Aufsatzvorrichtung (3) vorzugsweise an einer der Topföffnung (2) gegenüberliegenden Seite der Aufsatzvorrichtung (3) angeordnet ist.

3. Topfanordnung nach einem der vorangehenden Ansprüche,
**dadurch gekennzeichnet, dass**
die Filterkammeranordnung (5) mindestens eine, vorzugsweise mehrere, mit Filtermedium (F) befüllbare Filterkammer (9, 10) umfasst.

4. Topfanordnung nach Anspruch 3,
**dadurch gekennzeichnet, dass**
die Filterkammeranordnung (5) zwei konzentrisch um die Eintrittsöffnung (6) herum, und vorzugsweise in Radialrichtung hintereinander angeordnete Filterkammern (9, 10) umfasst.

5. Topfanordnung nach einem der vorangehenden Ansprüche,
**dadurch gekennzeichnet,**
**dass** das Filtermedium (F) eine Flüssigkeit, ein Feststoff, ein Gel, oder eine Paste ist.

6. Topfanordnung nach einem der vorangehenden Ansprüche,
**dadurch gekennzeichnet, dass**
die Filterkammeranordnung (5) eine Leitvorrichtung (11) umfasst, die dazu eingerichtet ist, Stoffe aus dem Topf durch das Filtermedium (F) zu leiten.

7. Topfanordnung nach einem der vorangehenden Ansprüche,
**dadurch gekennzeichnet, dass**
die Aufsatzvorrichtung (3) durch ein oberes Teil (18) und ein unteres Teil (19) gebildet ist, wobei das untere Teil (19) die mindestens eine Filterkammer (9, 10) bereitstellt und das obere Teil (18) die Leitvorrichtung (11) bereitstellt.

8. Topfanordnung nach Anspruch 7,
**dadurch gekennzeichnet, dass**
das obere Teil (18) und das untere Teil (19) separate Bauteile sind, oder dass das obere Teil (18) und das untere Teil (19) ein einteilig gefertigtes Bauteil bereitstellen.

9. Topfanordnung nach einem der vorangehenden Ansprüche,
**dadurch gekennzeichnet, dass**
die Leitvorrichtung (11) mindestens eine Leitwand (12, 13) umfasst, die in die mindestens eine Filterkammer (9, 10) hineinragt.

10. Topfanordnung nach einem der vorangehenden Ansprüche,
**dadurch gekennzeichnet, dass**
die mindestens eine Filterkammer (9, 10) Kammerwände (20, 21, 22) aufweist und die mindestens eine Leitwand (12, 13) zusammen mit den Kammerwänden (20, 21, 22) einen labyrinthartigen Weg für die Stoffe aus dem Topf (1) zwischen der Eintrittsöffnung (6) und der Druckausgleichsöffnung (8) vorgeben.

11. Küchenmaschine mit einer Topfanordnung nach einem der vorangehenden Ansprüche.

12. Aufsatzvorrichtung (3), die zur Verwendung in einer Topfanordnung nach einem der Ansprüche 1 bis 10 ausgebildet ist, wobei die Topfanordnung einen Topf (1) mit einer Topföffnung (2) aufweist,
wobei die Aufsatzvorrichtung (3) dazu ausgebildet ist, auf die Topföffnung (2) aufgesetzt zu werden, wobei die Aufsatzvorrichtung (3) eine Filtereinrichtung (4) zum Filtern von Stoffen, beispielsweise Dämpfen, Partikeln und/oder Geruchsstoffen aufweist,
die Filtereinrichtung (4) umfassend eine mit einem Filtermedium (F) befüllbare Filterkammeranordnung (5), wobei die Filterkammeranordnung (5) eine Eintrittsöffnung (6) aufweist, die dazu ausgebildet ist, bei einer Verwendung der Topfanordnung in einer Kochanwendung, beispielsweise einem Kochvorgang eines in dem Topf (1) aufgenommenen Lebensmittels, bei der die Aufsatzvorrichtung (3) auf den Topf (1) aufgesetzt ist, Stoffe aus dem Topf (1) in einen durch die Filterkammeranordnung (5) gebildeten Filterraum (7) eintreten zu lassen, sodass die Stoffe unter Einsatz des Filtermediums (F) filterbar sind.
